# EUROPEAN PATENT SPECIFICATION

(11) **EP 0 554 938 B1**
(45) Date of publication and mention of the grant of the patent: **27.08.1997**
(21) Application number: 93200197.7
(22) Date of filing: 27.01.1993
(51) Int. Cl.: H04N 9/69

(54) **Method for contrast correction**
Verfahren zur Kontrastkorrektur
Procédé pour la correction de contraste

(30) Priority: 04.02.1992 DE 4203092
(43) Date of publication of application: 11.08.1993
(73) Proprietor: Philips Patentverwaltung GmbH, 22335 Hamburg (DE); Philips Electronics N.V., 5621 BA Eindhoven (NL)
(72) Inventor: Blankevoort, Jaap Eduard, W-2000 Hamburg 1 (DE); van Rooy, Johannes Henricus Jozef Maria, W-2000 Hamburg 1 (DE); Voet, Hubertus Cornelis, W-2000 Hamburg 1 (DE)
(74) Representative: Steenbeek, Leonardus Johannes

(56) References cited:
- EP-A- 0 223 295
- EP-A- 0 235 862
- EP-A- 0 381 276
- EP-A- 0 454 417
- DE-A- 3 437 748
- US-A- 3 970 774
- US-A- 4 241 362

## Description

Die Erfindung geht aus von einem Verfahren zur Schwarzdehnung von Farbfernsehsignalen.

Die Erfindung bezieht sich auch auf eine Schaltungsanordnung zur Schwarzdehnung von Farbfernsehsignalen.

Bei Fernsehaufnahmen werden häufig in den Schattenpartien vorhandene geringfügige Kontrastunterschiede nicht deutlich genug übertragen, so daß innerhalb der Übertragungsstrecke der Videosignale bekanntlich Schaltungsanordnungen vorgesehen sind, welche die Amplitude der Videosignale in den Schattenpartien dehnen. Diese Schaltungsanordnungen sind unter dem Begriff Schwarzdehnung bekannt.

Neben der bekannten und üblichen Gammakorrektur zur Anpassung der linearen optoelektronischen Aufnahmekennlinie an die nichtlineare elektrooptische Wiedergabekennlinie ist diese zusätzliche Kontrastkorrektur auch deshalb zweckmäßig, weil damit der eingeschränkte Kontrastumfang der Fernsehaufnahme- und -wiedergabegeräte bei der Verarbeitung von kontrastreichen Bildvorlagen bzw. natürlichen Szenen kompensiert werden kann.

Aus der DE 28 55 189 A1 ist bereits eine Schaltungsanordnung zur Vergrößerung der Signalsteigung zur Kontrastkorrektur bekannt, bei welcher ein vom gammakorrigierten Luminanzsignal abgeleitetes Korrektursignal dem Luminanzsignal nach Zuschaltung überlagert werden kann. Diese bekannte Schaltungsanordnung hat den Nachteil, daß damit unerwünschte stufenförmige Helligkeitssprünge im kontrastkorrigierten Luminanzsignal erzeugt werden können.

Weiter beschreibt EP-A-0 381 276 eine Schaltungsanordnung zum Einstellen der Farbsättigung. Um mit geringem schaltungstechnischem Aufwand eine breitbandig fehlerfreie Signalverarbeitung bei der Verarbeitung von Farbwertsignalen zu ermöglichen, umfaßt eine Schaltungsanordnung zum Einstellen der Farbsättigung eines Farbfernsehsignals eine Farbeinstellstufe, der im Farbfernsehsignal enthaltene Farbinformation in Form von Farbwertsignalen zuführbar ist und von der in ihrer Amplitude eingestellte Farbwertsignale abgebbar sind, eine Matrixschaltung zum Kombinieren der Farbwertsignale zu einem Leuchtdichtesignal, eine Leuchtdichte-Einstellstufe zum Einstellen der Amplitude des Leuchtdichtesignals gegenläufig zur Amplitude der Farbwertsignale und eine Verknüpfungsanordnung zum additiven Verknüpfen des eingestellten Leuchtdichtesignals mit jedem der eingestellten Farbwertsignale.

Der vorliegenden Erfindung liegt die Aufgabe zugrunde, ein Verfahren und eine Schaltungsanordnung der eingangs genannten Art anzugeben, mit welchem in einfacher Weise ein gleichmäßig verlaufendes Schwarzdehnungs-Korrektursignal gebildet werden kann, welches jedem Farbkanal eines Farbfernsehbildsignalerzeugers zuführbar ist.

Diese Aufgabe wird durch die im Patentanspruch 1 angegebenen Merkmale gelöst. Ein zweiter Aspekt der Erfindung bietet eine Schaltungsanordnung nach Anspruch 4.

Das erfindungsgemäße Verfahren mit den Merkmalen des Patentanspruchs 1 hat den Vorteil, daß das gleichmäßig verlaufende Korrektursignal durch einfache Mittel veränderbar bzw. einstellbar ist und in jedem Farbkanal das jeweilige Farbwertsignal in gleicher Weise beeinflußt. Ein weiterer Vorteil ist darin zu sehen, daß das Korrektursignal unabhängig von der Farbsignalcodierung an beliebiger Stelle der Verarbeitung der Farbwertsignale im Bildsignalerzeuger zugesetzt werden kann.

Durch die in den Unteransprüchen aufgeführten Maßnahmen sind vorteilhafte Weiterbildungen und Verbesserungen möglich.

Ein Ausführungsbeispiel der Erfindung ist in der Zeichnung dargestellt und in der nachfolgenden Beschreibung näher erläutert.

Es zeigen:
Fig. 1 ein Blockschaltbild der erfindungsgemäßen Kontrastkorrektur,
Fig. 2 eine Schaltung zur Ableitung des Kontrast-Korrektursignals,
Fig. 3 eine Detailschaltung gemäß Figur 2.

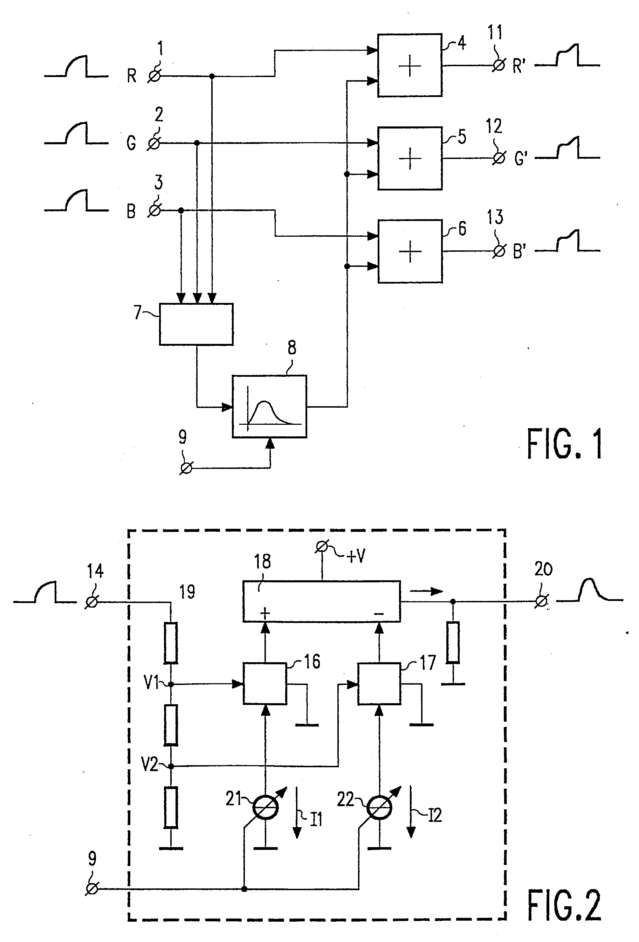

In dem Blockschaltbild gemäß Figur 1 werden die an den Klemmen 1, 2, 3 liegenden Farbwertsignale R bzw. G bzw. B, welche von einer in der Figur nicht dargestellten Bildsignalquelle erzeugt werden, einerseits je einer im Hauptsignalweg liegenden Addierstufe 4 bzw. 5 bzw. 6 und andererseits je einem Eingang einer Matrix 7 zur Erzeugung des Luminanzsignals zugeführt. Die drei Farbwertsignale R,G,B können entweder bereits gammakorrigiert sein - wie in der Figur dargestellt - oder aber diese Korrektur erst später durchlaufen. Die Addierstufen 4 bis 6 können an irgendeiner Stelle der Videosignalverarbeitung für die Farbwertsignale R, G, B angeordnet sein.

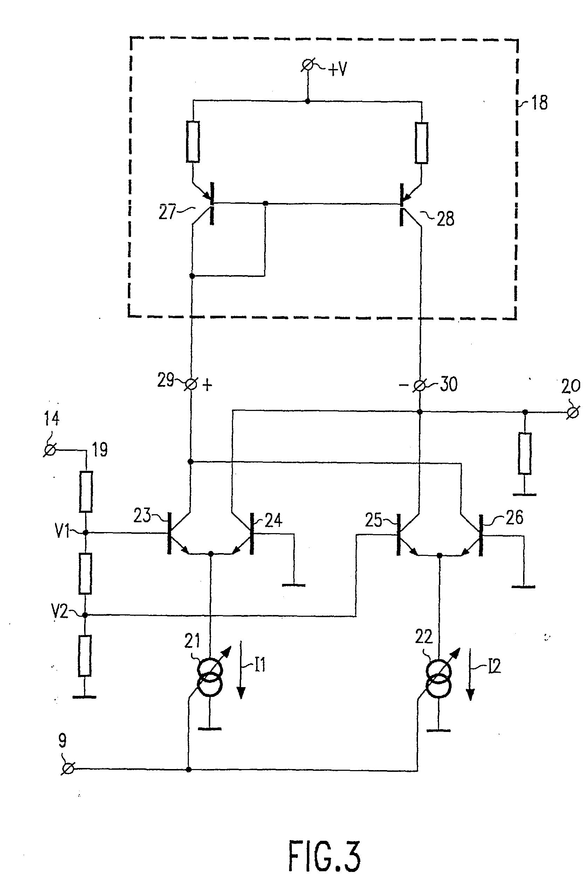

Am Ausgang der Matrix 7 ist dann ein von den Farbwertsignalen R,G,B abgeleitetes Luminanzsignal Y abnehmbar, welches der nachfolgenden Schaltung 8 zur Bildung des Kontrast-Korrektursignals zugeführt wird. Die Erzeugung dieses Kontrast-Korrektursignals wird in Verbindung mit der Beschreibung der Figuren 2 und 3 näher erläutert. Am Ausgang der Schaltung 8 ist dann ein Kontrast-Korrektursignal abnehmbar, welches dem jeweils anderen Eingang der Addierstufen 4, 5, 6 zugeleitet wird, so daß an den Ausgängen 11, 12, 13 der Addierstufen 4, 5, 6 je ein kontrastkorrigiertes bzw. schwarzgedehntes Farbwertsignal R', G' und B' abnehmbar sind.

Die Kurvenform des in der Schaltung 8 gebildeten Korrektursignals ist mit Hilfe einer an Klemme 9 liegenden Steuerspannung beeinflußbar. Diese Steuerspannung kann vorteilhafterweise in Fernbediengeräten erzeugt und an die Klemme 9 übertragen werden. Das in der Schaltung 8 gebildete Kontrast-Korrektursignal, welches zur sogenannten Schwarzdehnung des Videosignals verwendet wird, weist daher in der Nähe des Bezugspegels eine besonders starke Signalsteigung und große Amplitude auf, während es in der Nähe des Weißwertes und in den Austastlücken zu Null wird.

In Figur 2 ist die Schaltung zur Bildung des Kontrast-Korrektursignals etwas ausführlicher dargestellt, wobei an Klemme 14 das Eingangs-Luminanzsignal anliegt. Eine solche Schaltung ist prinzipiell bereits aus der EP 0235 862 B1 für eine Gammakorrektur bekannt, jedoch mit dem Unterschied, daß die beiden von den Differenzverstärkern 16, 17 erzeugten nichtlinearen , d. h. Hyperbeltangens-Funktionen in der Stromspiegelschaltung 18 addiert und nicht wie bei dieser Schaltung erfindungsgemäß subtrahiert werden. Die beiden Differenzverstärker 16, 17 werden hierbei ebenfalls durch die an ihren Eingängen unterschiedlichen von dem Spannungsteiler 19 abgegriffenen Signalspannungen bei unterschiedlichen Pegelwerten in den Sättigungszustand gebracht. Die Stromquellen 21 und 22 liefern ebenfalls einen in Abhängigkeit der angelegten Spannungen V1 bzw. V2 entsprechend konstanten Strom I1 bzw. I2. Dabei sind die Stromquellen 21 und 22 mit Hilfe einer über Klemme 9 angelegten Steuerspannung fernsteuerbar, womit der Anstieg des Korrektursignals bzw. der Grad der Schwarzdehnung geändert werden kann. Am Ausgang 20 der Schaltung 8 ist sodann ein entsprechendes Kontrast-Korrektursignal abnehmbar.

Die Detailschaltung der Figur 3 entspricht im wesentlichen der in der EP 0235 862 B1 dargestellten und beschriebenen Schaltung. Die Differenzverstärker 16 und 17 bestehen hierbei ebenfalls aus jeweils zwei emittergekoppelten Transistoren 23, 24 und 25, 26, wobei den Basiselektroden der Transistoren 23 und 25 je ein Eingangssignal in unterschiedlicher Höhe über den Spannungsteiler 19 zugeführt wird, und die Basiselektroden der Transistoren 24 und 26 an Bezugspotential liegen. Im Emitterkreis der Transistoren 23 und 24 liegt die Stromquelle 21 und im Emitterkreis der Transistoren 25 und 26 liegt die Stromquelle 22. Die Stromspiegelschaltung 18 besteht auch hierbei aus zwei Transistoren 27 und 28, welche über die Verbindungen 29 und 30 mit den Ausgängen der Differenzverstärker verbunden sind, so daß am Ausgang 20 das gewünschte Kontrast-Korrektursignal abnehmbar ist. Die gemäß Hyperbeltangens-Funktionen erzeugten Ströme der Differenzverstärker 23, 24 und 25, 26 werden hierbei von den bei unterschiedlichen Eingangssignalspannungen V1, V2 in die Sättigung getriebenen Differenzverstärker-Transistorpaaren 23, 24 bzw. 25, 26 gebildet. Die Form des Korrektursignals kann dabei nicht nur durch unterschiedliche Spannungspegel am Spannungsteiler 19, sondern auch durch unterschiedliche Ströme der Stromquellen 21 und 22 gebildet werden.

## Claims

1. A method of black-stretching color television signals, in which a luminance signal (Y) is formed from color signals (R,G,B) by way of matrixing, and in which a correction signal is derived from a luminance signal (Y), which correction signal is largest in the proximity of the black level and becomes zero in the blanking interval and in the proximity of the white level, characterized in that said correction signal is added to each color signal (R,G,B).

2. A method as claimed in Claim 1, characterized in that the correction signal is derived from the luminance signal by means of variable, non-linear amplification.

3. A method as claimed in Claim 2, characterized in that the correction signal is formed by subtraction of two signal currents varying in accordance with a hyperbolic tangent function, which currents are derived from different input signal voltages of the luminance signal.

4. A circuit arrangement for performing the method as claimed in Claim 1, comprising a matrix (7) whose inputs convey the three color signals (R, G, B) and from whose output the luminance signal (Y) formed therefrom can be derived, the luminance signal (Y) being applied to a circuit (8) for deriving the correction signal as claimed in Claim 1, characterized in that the output of said circuit (8) is connected to respective first inputs of three adder stages (4, 5, 6) whose respective second inputs receive one of the three color signals (R, G, B) and from whose outputs (11, 12, 13) the corrected color signals (R', G', B') can be derived.

5. A circuit arrangement as claimed in Claim 4, characterized in that the circuit (8) for deriving the correction signal comprises two non-linear differential amplifiers (16, 17) which can be driven into saturation at different input signal values (V1, V2), in that a current source (21, 22) is provided for each differential amplifier (16, 17), which current sources supply different, substantially constant currents for the differential amplifiers (16, 17), in that a current mirror circuit (18) is provided as a common supply circuit for the differential amplifiers (16, 17), which current mirror circuit has two connections (29, 30) for the outputs of the differential amplifiers for adding or subtracting the amplifier currents, the connection (30) for subtraction being connected to the output (20) of the circuit.

6. A circuit arrangement as claimed in Claim 5, characterized in that the two differential amplifiers (16, 17) each comprise a pair of emitter-coupled transistors (23, 24 and 25, 26, respectively) whose emitter leads incorporate adjustable current sources (21, 22), in that the base electrodes of the first transistors (23, 25) are connected to different input signal values (V1, V2), while the base electrodes of the second transistors (24, 26) are connected to the reference potential, and in that the collector of the first transistor (23) of the first differential amplifier (16) and the collector of the second transistor (26) of the second differential amplifier (17) are connected to the connection (29) for addition, and the collector of the first transistor (25) of the second differential amplifier (17) and the collector of the second transistor (24) of the first differential amplifier (16) are connected to the connection (30) for subtraction.

7. A circuit arrangement as claimed in Claim 6, characterized in that the current sources (21, 22) can be adjusted by means of remote control.

## Patentansprüche

1. Verfahren zur Schwarzdehnung von Farbfernsehsignalen, wobei von Farbwertsignalen (R, G, B) durch Matrizierung ein Luminanzsignal (Y) gebildet wird, und vom Luminanzsignal (Y) ein Korrektursignal abgeleitet wird welches Korrektursignal in der Nähe des Schwarzwertes am größten und sowohl in der Austastlücke als auch in der Nähe des Weißwertes zu Null wird, dadurch gekennzeichnet, daß dieses Korrektursignal zu jedem der Farbwertsignale (R, G, B) addiert wird.

2. Verfahren nach Anspruch 1, dadurch gekennzeichnet, daß das Korrektursignal durch veränderbare nichtlineare Verstärkung vom Luminanzsignal abgeleitet wird.

3. Verfahren nach Anspruch 2, dadurch gekennzeichnet, daß das Korrektursignal durch Subtraktion zweier gemäß Hyperbeltangens-Funktion verlaufender Signalströme gebildet wird, welche von unterschiedlichen Eingangssignalspannungen des Luminanzsignals abgeleitet werden.

4. Schaltungsanordnung zur Durchführung des Verfahrens nach Anspruch 1, welche Schaltungsanordnung eine Matrix (7) umfaßt an deren Eingängen die drei Farbwertsignale (R, G, B) anliegen und an deren Ausgang das daraus gebildete Luminanzsignal (Y) abnehmbar ist, wobei das Luminanzsignal (Y) einer Schaltung (8) zur Ableitung des Korrektursignals nach Anspruch 1 zugeführt ist, dadurch gekennzeichnet, daß der Ausgang dieser Schaltung (8) an je einen ersten Eingang von drei Addierstufen (4, 5, 6) angeschlossen ist, deren jeweils zweitem Eingang eines der drei Farbwertsignale (R, G, B) zugeführt ist und an deren Ausgängen (11, 12, 13) die korrigierten Farbwertsignale (R', G', B') abnehmbar sind.

5. Schaltung nach Anspruch 4, dadurch gekennzeichnet, daß die Schaltung (8) zur Ableitung des Korrektursignals zwei nichtlineare Differenzverstärker (16, 17) enthält, welche bei unterschiedlichen Eingangssignalwerten (V1, V2) in den Sättigungszustand steuerbar sind, daß für jeden Differenzverstärker (16, 17) je eine Stromquelle (21, 22) vorgesehen ist, welche für die Differenzverstärker (16, 17) verschiedene, nahezu konstante Ströme liefern, daß eine Stromspiegelschaltung (18) als gemeinsame Speiseschaltung für die Differenzverstärker (16, 17) vorhanden ist, welche zwei Verbindungen (29, 30) für die Ausgänge der Differenzverstärker zur Addition bzw. zur Subtraktion der Verstärkerströme aufweist, wobei die Subtraktionsverbindung (30) mit dem Ausgang (22) der Schaltung verbunden ist.

6. Schaltung nach Anspruch 5, dadurch gekennzeichnet, daß die beiden Differenzverstärker (16, 17) aus je einem Paar emittergekoppelter Transistoren (23, 24 bzw. 25, 26) bestehen, in deren Emitterleitungen je eine einstellbare Stromquelle (21, 22) angeordnet ist, daß die jeweils ersten Transistoren (23, 25) mit ihren Basiselektroden an unterschiedlichen Eingangssignalwerten (V1, V2) angeschlossen sind, während die jeweils zweiten Transistoren (24, 26) mit ihren Basiselektroden an Bezugspotential liegen, und daß die Kollektoren des ersten Transistors (23) vom ersten Differenzverstärker (16) sowie des zweiten Transistors (26) vom zweiten Differenzverstärker (17) an die Additionsverbindung (29) und die des ersten Transistors (25) vom zweiten Differenzverstärker (17) sowie des zweiten Transistors (24) vom ersten Differenzverstärker (16) an die Subtraktionsverbindung (30) angeschlossen sind.

7. Schaltung nach Anspruch 6, dadurch gekennzeichnet, daß die Einstellung der Stromquellen (21, 22) fernsteuerbar ist.

## Revendications

1. Procédé d'écartement du noir de signaux de télévision en couleurs, dans lequel un signal de luminance (Y) est formé à partir des signaux primaires de couleur (R, V, B), et un signal de correction est dérivé du signal de luminance (Y), lequel signal de correction est maximisé au voisinage du niveau du noir et mis à zéro dans l'intervalle de suppression de même qu'au voisinage du niveau du blanc, caractérisé en ce que ce signal de correction est additionné à chacun des signaux primaires de couleur (R, V, B).

2. Procédé suivant la revendication 1, caractérisé en ce que le signal de correction est dérivé du signal de luminance par une amplification non linéaire variable.

3. Procédé suivant la revendication 2, caractérisé en ce que le signal de correction est formé par la soustraction de deux courants de signaux qui varient suivant une fonction tangente hyperbolique et qui sont dérivés de différentes tensions du signal de luminance à l'entrée.

4. Montage de circuit pour exécuter le procédé suivant la revendication 1, lequel montage de circuit comprend une matrice (7), aux entrées de laquelle sont appliqués les trois signaux primaires de couleur (R, V, B) et à la sortie de laquelle peut être obtenu le signal de luminance (Y) qui est formé à partir de ces signaux, le signal de luminance (Y) étant appliqué à un circuit (8) destiné à dériver le signal de correction conformément à la revendication 1, caractérisé en ce que la sortie de ce circuit (8) est connectée à chaque première entrée de trois étages additionneurs (4, 5, 6), aux deuxièmes entrées de chacun desquels est respectivement appliqué un des trois signaux primaires de couleur (R, V, B) et aux sorties (11, 12, 13) desquels peuvent être obtenus les signaux primaires de couleur corrigés (R', V', B').

5. Circuit suivant la revendication 4, caractérisé en ce que le circuit (8) destiné à dériver le signal de correction contient deux amplificateurs différentiels non linéaires (16, 17), qui peuvent être pilotés dans l'état de saturation en cas de valeurs (V1, V2) des signaux d'entrée différentes, que pour chaque amplificateur différentiel (16, 17) est chaque fois prévue une source de courant (21, 22), qui fournit un courant différent, quasi constant pour les amplificateurs différentiels (16, 17), qu'un circuit à miroir de courant (18) est prévu en tant que circuit d'alimentation commun pour les amplificateurs différentiels (16, 17), qui présente deux liaisons (29, 30) pour les sorties des amplificateurs différentiels respectivement pour l'addition et la soustraction des courants d'amplificateurs, la liaison de soustraction (30) étant connectée à la sortie (22) du circuit.

6. Circuit suivant la revendication 5, caractérisé en ce que les deux amplificateurs différentiels (16, 17) sont constitués chacun d'une paire de transistors (23, 24 et 25, 26) couplés par les émetteurs, dans les lignes d'émetteurs desquels est chaque fois agencée une source de courant réglable (21, 23), que les premiers transistors respectifs (23, 25) sont connectés par leurs électrodes de base à des valeurs de signaux d'entrée différentes (V1, V2), tandis que les deuxièmes transistors respectifs (24, 26) se trouvent via leurs électrodes de base au potentiel de référence, et que les collecteurs du premier transistor (23) du premier amplificateur différentiel (16) ainsi que du deuxième transistor (26) du deuxième amplificateur différentiel (17) sont connectés à la liaison d'addition (29) et ceux du premier transistor (25) du deuxième amplificateur différentiel (17) ainsi que du deuxième transistor (24) du premier amplificateur différentiel (16) sont connectés à la liaison de soustraction (30).

7. Circuit suivant la revendication 6, caractérisé en ce que le réglage des sources de courant (21, 22) peut être commandé à distance.
